# EUROPEAN PATENT APPLICATION

(11) **EP 4 270 370 A1**
(43) Date of publication of application: **01.11.2023**
(21) Application number: 22170922.3
(22) Date of filing: 29.04.2022
(51) Int. Cl.: G09F 19/22, G09F 19/18, G09F 27/00, G09F 15/00

(54) **SIGNAGE PANEL WITH REAR DISPLAY**

(71) Applicant: Al Ansari, Ahmad Abdulrahim Ahmad Mohammed, Dubai (AE)
(72) Inventor: Al Ansari, Ahmad Abdulrahim Ahmad Mohammed, Dubai (AE)
(74) Representative: Ipside

(57) **Abstract**

Signage panel (100), in particular for road signage, comprising a display plate (10) mounted on a support structure (20), said plate comprising a front face on which information, such as a road traffic signal, is displayed, said signage panel comprises an optical and/or electronic display system, configured to display information on a neutral rear face of the display plate (10).

## Description

### TECHNICAL FIELD

The present invention belongs to the field of signage panels, in particular road signage panels, and relates more particularly to a signage panel providing an information display on its rear face by means of a suitable display system.

The present invention finds a direct, but not exclusive, application in road signage panels for displaying on their neutral rear face a signage essentially of an advertising or informative nature.

### PRIOR ART

Signage panels, especially for road traffic, fall into several categories depending on the type of information they indicate and the shape and dimensions of their display plates.

In large urban agglomerations and on the major roads which pass through them, signage panels are frequently used, the display plates of which have large dimensions and a rectangular shape, and are arranged horizontally or vertically along their length. These panels make it possible to display so-called road information (directions, distances, locations, etc.) mainly intended for the drivers and passengers of the vehicles concerned, and/or advertising content intended for any public using the road. Sometimes these signage panels are also used to display road safety or public interest messages.

Depending on the type of information, the display can be permanent or dynamic. In the case of a permanent display, the signage panel does not have any particular display technology and simply consists of a generally metallic plate on which the information is printed, for example by direct printing or by sticking a film printed. On the other hand, in the case of a dynamic display, the signage panel comprises electronic display modules such as light-emitting diode (LED) screens.

This latter case is not considered within the scope of the present invention.

Indeed, in the case of road signage panels with permanent display on a metal plate, only the front face of the plate is used to display the information. Thus, the signage panels are oriented according to the direction of traffic, so that their front faces can be seen by the driver and the passengers of a vehicle facing them and approaching them, and can remain visible until the vehicle passes them.

As a result, the rear face of a road signage panel, or its reverse, remains neutral and does not include any display.

However, it is possible that a person finds himself in a situation where he sees the rear face of a road signage panel. For example, when this person is a pedestrian walking on a sidewalk in the opposite direction of the vehicles traveling on the adjacent lane of the sidewalk, and being opposite the rear face of a traffic signage panel anchored on said sidewalk. This situation is very common in large cities. Also, drivers and passengers of a vehicle traveling on a two-way road can see the rear face of a road signage panel facing vehicles going in the opposite direction. This situation occurs especially on highways.

Consequently, the rear face of a signage panel has an unused display surface as large as that of the front face of said panel. In other words, the use of the rear faces of a park of road signage panels for the display of information would make it possible to double the display surface available.

Of course, some display panels other than road signage panels allow display on both sides. This is particularly the case for scrolling billboards which are mainly deployed in urban areas (shopping centers, main avenues, etc.).

In general, a scrolling display panel comprises a box containing at least one carrier strip of posters, commonly called poster train, wound on two parallel rollers associated with rotational drive means such as electric motors and reducers.

The box has one or two glazed or simply transparent windows to allow the distribution of the information written on the posters and scrolling according to the unwinding and winding of the trains of posters.

A scrolling display device of such a design is for example described in the document FR2869141.

This type of display on both sides of a panel cannot be integrated into an existing signage panel, and even less into a signage panel comprising a metal display plate. Indeed, to use a solution such as scrolling display on both sides in the case of road signage panels, it is necessary to completely replace the traditional panels. In view of the very high cost that this would represent and the strict regulations governing signage panels, and road equipment more generally, the replacement of traditional signage panels could not be envisaged.

Moreover, the document KR100658570B1 describes a double-sided signage panel making it possible to replace a road signage panel to indicate road information and to insert an advertisement in a rear part of the signage panel by replacing the road signage panel.

This solution therefore proposes to replace an existing panel and does not make it possible to integrate a display on the rear face of an existing panel without modifying the latter.

No prior solution allows to solve the technical problem of displaying information on a neutral rear face of an existing signage panel without replacing elements thereof.

### PRESENTATION OF THE INVENTION

The present invention aims to overcome the limitations of the prior art set out above and proposes an innovative solution to allow information to be displayed on the back of a road signage panel, and thus increase the display surface available for a given park of signage panels.

To this end, the present invention relates to a signage panel, in particular road signage panels, comprising a display plate mounted on a support structure, said plate comprising a front face on which information, such as a road traffic signal, is displayed. This signage panel is remarkable in that it comprises an optical and/or electronic display system, configured to display information on a neutral rear face of the display plate.

According to a first embodiment, the display system comprises at least one electronic display screen fixed to the rear face of the display plate.

According to a second embodiment, the display system comprises a light projector arranged to project information onto the rear face of the display plate. Advantageously, the projector can be directly attached to the display plate or attached to the support structure.

According to one aspect of the invention, the projector comprises a light-emitting diode (LED) emitter.

According to one aspect of the invention, the projector is of overhead projector or video projector type.

According to one aspect of the invention, the information displayed on the rear face of the display plate is dynamic information. This is particularly suitable for information of an advertising nature to attract the attention of an observer. Advantageously, the display system comprises a communication module, capable of communicating over a wired or wireless network with a remote operator to modify the information displayed by the display system.

The fundamental concepts of the invention just having been disclosed above in their most elementary form, other details and features will emerge more clearly from the reading of the following description with regard to the accompanying drawings, giving by way of non-limitative example an embodiment of a signage panel with rear display, in accordance with the principles of the invention.

### BRIEF DESCRIPTION OF FIGURES

The various figures and the elements of one and the same figure are not necessarily shown to the same scale. In all the figures, the identical or equivalent elements bear the same numerical reference.

There are thus illustrated in:
- Figure 1: views illustrating the front face and the rear face of a road signage panel of the prior art;
- Figure 2: a front view of a bracket type signage panel adapted to the invention;
- Figure 3: a front view of a gantry-type signage panel adapted to the invention;
- Figure 4: a rear view of a display plate of a road signage panel adapted to the invention, showing a neutral rear face comprising no display;
- Figure 5a: the rear face of a signage panel according to a first embodiment of the invention, on which the display is made by means of several screens;
- Figure 5b: the rear face of a signage panel according to the first embodiment of the invention, on which the display is made by means of a single screen;
- Figure 6: the rear face of a signage panel according to a second embodiment of the invention, on which the display is produced by light projection;
- Figure 7: a gantry-type traffic signage panel according to the second embodiment of the invention;
- Figure 8a: a partial side view of a signage panel with a projector attached to the display plate;
- Figure 8b: a partial side view of a signage panel with a projector attached to the support structure;
- Figure 9a: a partial side view of a different traffic signage panel with a projector attached to a transverse arm of the support structure;
- Figure 9b: a rear view of the panel of figure 9a:
- Figure 10: an exploded view of an example of a projector.

### DETAILED DESCRIPTION OF EMBODIMENTS

It should be noted that certain technical elements well known to those skilled in the art are recalled here to avoid any insufficiency or ambiguity in the understanding of the present description.

In the embodiment described below, reference is made to a signage panel provided with a system for displaying information on its rear face, intended primarily to be installed on road traffic lanes. This non-limiting example is given for a better understanding of the invention and does not exclude the installation of such a signage panel on railway or river traffic lanes, for example, nor the use of the invention on all panels having by nature a single display face. Such panels are used in particular to display the poster of an event, a plan in a construction site, useful information for visiting a place or a monument, etc.

In the present description, the term "signage panel" denotes by extension the assembly consisting of a display panel as such and its support structure. In known manner, such a support structure can be a bracket, a gantry, a high mast, or any other construction suitable for supporting a signage panel.

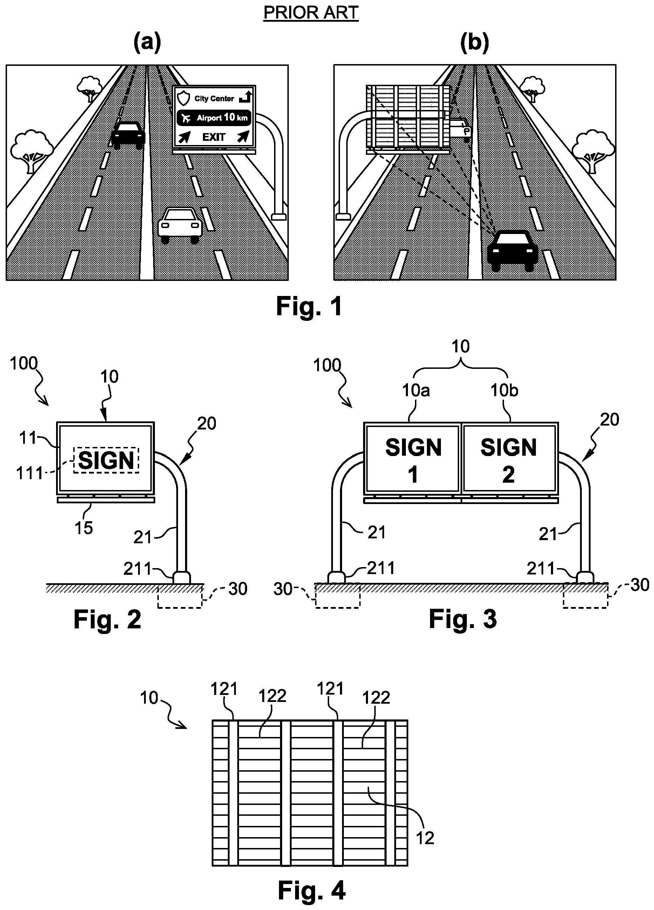

Figure 1 represents a conventional road signage panel, installed on a road and having a front face containing the information to be displayed and a neutral rear face which does not include any information and which allows said panel to be fixed to a support structure.

The part allowing the display of information on this type of signage panel is a generally metallic plate whose front face is treated to have retroreflective properties of the incident light. Thus, when reference is made to a face, front or rear, of the signage panel, it should be understood that this is a face of the display plate only. The front face and the rear face of the road signage panel are respectively shown in view (a) and view (b) of Figure 1.

When the road signage panel is correctly oriented for specific use on a given road, the front face is intended to be seen by anyone facing it, provided that said person is located within an interval (distance) of visibility. The front face of the panel becomes more and more visible to the person when approaching it until said person passes it.

Similarly, the rear face of the traffic signage panel is visible to anyone facing it and looking in its direction, and remains visible until the person has passed it. However, in prior art road signage panels, this rear face is never used to display information intended for users.

Thus, in the example of figure 1, a driver or a passenger of the white-colored vehicle, which is running in the direction of the front face of the road signage panel, is predisposed to see said front face and to pick up information that may be useful to him; while a driver or a passenger of the black-colored vehicle, which is running in the direction of the rear face of the panel, can see said rear face which does not contain any information display.

Of course, figure 1 represents a scene in a right-hand drive system and the above observation must be reversed in the case of a left-hand drive system.

Although the black-colored vehicle is located slightly at an angle to the traffic signage panel, due to the position of the said signage panel strictly above the opposite lane, and therefore does not allow its occupants to have a frontal view of the rear face of said panel, the field of vision offered by the rear face to vehicles taking the opposite lane is sufficient to allow display of information on said rear face. Especially since on certain types of signage panels, the rear face is extended and even allows frontal vision to certain road users.

The cone of visibility allowing the driver of the black-colored vehicle to see the rear face of the panel is shown in broken lines in view (b) of figure 1.

Based on this observation, the main purpose of the present invention is to allow information to be displayed on the rear face of a signage panel, which represents an unused surface as large as that of the front face. Thus, the display surface available for a given set of road signage panels can be doubled.

Beforehand to the description of the technical features of the invention making it possible to achieve this result, it is appropriate to briefly recall the most elementary composition of a signage panel which would be suitable for the implementation of the invention.

To do this, it is only considered the two most common types of signage panels in large cities with dense traffic, namely the panel on a bracket and the panel on a gantry.

Figures 2 and 3 represent a road signage panel 100 mainly comprising a display plate 10, also called a "register" in specialized road signage panel jargon, and a structure 20 supporting said plate.

In Figure 2, the support structure 20 is a bracket and comprises an upright 21 anchored to the ground, extending vertically over a determined height and extending horizontally by an arm on which the plate 10 is fixed.

In Figure 3, the support structure 20 is a gantry and comprises two uprights 21 spaced apart and connected by a crosspiece on which the plate 10 is fixed. The length of the crosspiece thus determines the size of the plate 10 which can be fixed thereto. In figure 3, the plate 10 consists of two joined parts 10a and 10b.

In either case, each upright 21 includes a base 211 connecting it to a foundation block 30 by means of a suitable anchoring device such as a bolted plate.

The support structure 20 must indeed be firmly anchored to the ground to both support the plate 10 and resist the effect of the wind amplified by the generally large surface of the plate.

The plate 10, according to the example illustrated, has a generally rectangular shape, with vertical and horizontal sides when the signage panel 100 is installed, and has a front face 11 having a useful display surface which covers it for the most part or even fully.

The front face 11 thus allows to display textual, graphic or mixed information 111, as shown schematically in figure 1.

The information 111, also called "sign" or "signal", can be displayed by sticking a printed film on the front face 11 of the plate 10 or by a simple inscription painted directly on said front face. In both cases, and in order to improve the readability of the information 111, the plate 10 comprises a lighting device 15 placed along one side of said plate, here the lower side.

Of course, the lighting device is accessory and the front face 11 of the plate 10 can be retroreflective to better show the information 111 when it is illuminated by an incident external light such as a car headlight.

Figure 4 represents a rear face 12 of the plate 10, by which said plate is fixed to support structure 20. This rear face 12 comprises parallel fixing bars 121, themselves fixed to rails 122 which are perpendicular to them. The fixing bars 121 allow to fix the plate 10 to the support structure 20 by various means of mechanical fixing.

The rear face 12 of the plate 10 can thus be used to display information by means of a suitable display system that can easily be integrated into the road signage panel 100.

According to a first embodiment, the display system consists in electronically displaying the information on one or more electronic display modules such as screens fixed on the rear face of the road signage panel.

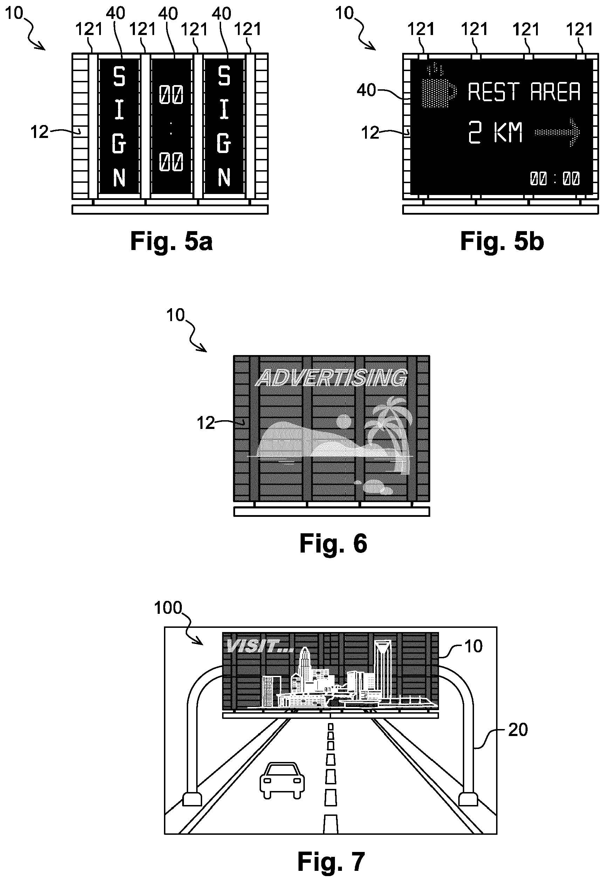

Figure 5a represents an example in which the plate 10 comprises on its rear face 12 several screens 40 arranged in the interstices separating the fixing bars 121.

Figure 5b shows another example in which the plate 10 comprises a single screen 40, covering a major part of the rear face 12 and fixed to the fixing bars 121, for better readability of the information displayed and advantageous aesthetic appeal.

Each screen 40 allows to display one or more information of different kinds. The information can be textual and/or graphic.

The information can be stationary or variable (dynamic) and, for example, corresponds to a road safety message, the date and time, the weather conditions, a commercial indication such as the direction and the distance of a rest area, etc. The display screens 40 can be of any technology provided that the display is sufficiently clear and bright under normal conditions.

For example, the screens 40 implement a digital display technology, preferably among the liquid crystal display (LCD) or the display with light-emitting diodes (LED), organic (OLED) or combining an active-matrix technology (AMOLED). In addition, for improved contrast and good readability in a dark or poorly lit environment, the screens 40 combine the backlighting technique with the display technology, LCD or LED, used.

In addition, the screens 40 can implement a suitable alternative display technology, such as electronic paper (*e-paper*), whether polychrome (color display) or monochrome (black and white display). Electronic paper is a very advantageous display technology due to its low energy consumption compared to other solutions. According to a second embodiment, the display of information on the rear face of the signage panel consists of optically projecting the information onto said rear face by means of a suitable light projector.

Figures 6 and 7 represent examples of projections of an advertising nature on the rear face 12 of the plate 10.

The projection and correction parameters of the projected image, such as light intensity, contrast, sharpness, etc., are adjusted to obtain the desired rendering. An automatic adjustment can also be programmed to adapt to varying ambient brightness depending on the time of day, including day and night.

The projection is obtained by a projector placed close to the rear face and correctly oriented with respect to it. The projector is preferably directly attached to the signage panel, either on the plate or on the support structure.

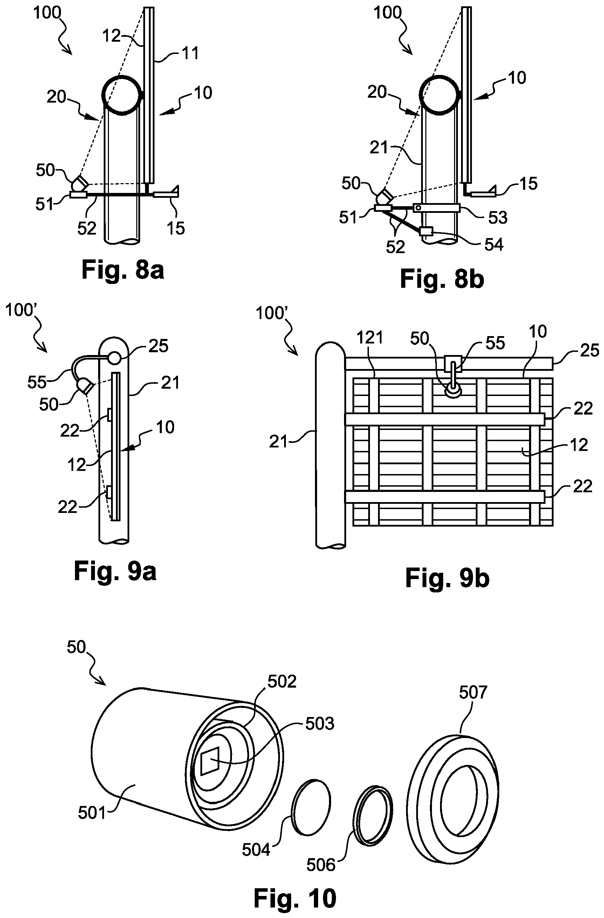

Figure 8a represents_the road signage panel 100 comprising a projector 50 integral with the plate 10, more precisely fixed to the lighting device 15. Indeed, according to this embodiment, the projector 50 is supported by a substantially horizontal plate 51, said plate being connected to the lighting device 15 by means of a rod 52.

Of course, the rod 52 can be directly fixed to the rear face 12 of the plate 10.

The rod 52 can be fixed on the signaling 10 by any suitable means (bolting, screwing, welding, etc.).

Figure 8b shows an alternative embodiment in which the projector 50 still lies on the plate 51, which itself is fixed to the upright 21 by means of a clamping ring 53 and a rod 52. The projector 50 and its plate 51 can also be stabilized by an additional rod 52 inclined and resting against the upright 21 via a support element 54.

The fixing system of the projector 50 represented in figure 8b is particularly suitable for road signage panels 100 in which the plate 10 is carried at the very top of the support structure 20 on a horizontal arm (case of the bracket) or on a crosspiece (case of the gantry).

A person skilled in the art easily understands that for other types of signage panels, another projector fixing system can be envisaged and used.

Figures 9a and 9b represent, for example, a road signage panel 100' in which the plate 10 is fixed laterally to the upright 21, which alone constitutes the support structure 20, by means of arms 22 perpendicular to the upright 21. In this example, the projector 50 is mounted on a transverse arm 25 fixed to the upright 21. The projector 50 is placed on the arm 25 so as to be positioned substantially at the level of the perpendicular bisector of the horizontal sides of the plate 10. In addition, the projector 50 is connected to the arm 25 by a flexible arm 55 making it possible to adjust the orientation of the said projector.

According to the present invention, the projector can be an overhead projector, a video projector or a projector of any other type that would be suitable.

Figure 10 represents an example of a projector 50 mainly comprising a body 501, a light source 502, a projection element 504, an optical lens 507 and an electrical power source. Incidentally, the projector 50 includes at least one retaining means 506, allowing the mounting of the projection element 504. For example, the retaining means 506 is a retaining ring.

The body 501 according to the example shown has a generally cylindrical shape of reduced diameter to be as compact as possible. Preferably, the body 501 is a tube with sufficient internal volume to enclose the main components of the projector as shown in figure 10.

The light source 502, according to the invention, comprises at least one optoelectronic device such as a laser emitter or a LED emitter. Each of the aforementioned technologies has a certain number of advantages and can be more or less adapted to a given application. Laser transmitters are characterized from LED transmitters, among other things, by a greater range. Conversely, LED emitters allow for patterns with sharper edges and more even illumination.

For display on the rear faces of road signage panels, the distances involved are compatible with the two types of transmitters.

However, it may be envisaged to use a laser emitter in the case of large projection distances, and an LED emitter for small to medium projection distances. The projector can also include the combination of a laser emitter and an LED emitter and operate with one or the other as needed.

Finally, regardless of the technology used for the display system (screen or projector), it may include a communication module, preferably wireless or on an Internet-type network, to allow an operator to control and remotely modify the content of the information displayed.

According to another embodiment, not shown, the display plate comprises a membrane placed opposite its rear face and allows to project information by means of an exciting light placed between said membrane and said rear face. The exciting light for example reveals a pattern produced either on the membrane itself or on an intermediate film placed immediately before said membrane.

For regulatory reasons, in force in certain European countries including France for example, the colors used for the display on the rear face of the panel must be neutral and not repeat the colors used in conventional road signage panels.

Considering the present description, certain elements of the road signage panel can be modified or replaced by equivalent elements without departing from the scope of the invention.

Furthermore, the support devices for road signage panels located on bridges, in tunnels, open or covered trenches do not come within the scope of the present invention.

## Claims

1. Signage panel (100, 100'), in particular for road signage, comprising a display plate (10) mounted on a support structure (20), said plate comprising a front face (11) on which information (111), such as a road traffic signal, is displayed, **characterized in that** it comprises an optical and/or electronic display system (40, 50), configured to display information on a neutral rear face (12) of the display plate (10).

2. Signage panel according to claim 1, wherein the display system comprises at least one electronic display screen (40) attached to the rear face (12) of the display plate (10).

3. Signage panel according to claim 1, wherein the display system comprises a light projector (50) arranged to project information onto the rear face (12) of the display plate (10).

4. Signage panel according to claim 3, wherein the projector (50) is directly attached to the display plate (10).

5. Signage panel according to claim 3, wherein the projector (50) is attached to the support structure (20).

6. Signage panel according to any one of claims 3 to 5, wherein the projector (50) comprises a light emitting diode (LED) emitter.

7. Signage panel according to any one of claims 3 to 5, in which the projector (50) is of the overhead projector or video projector type.

8. Signage panel according to any one of the preceding claims, wherein the information displayed on the rear face (12) of the display plate (10) is dynamic information.

9. Signage panel according to any one of the preceding claims, wherein the display system (40, 50) includes a communication module.

10. Signage panel according to claim 9, wherein the communication module is able to communicate over a wired or wireless network with a remote operator to modify the information displayed by the display system (40, 50).
